# EUROPEAN PATENT SPECIFICATION

(11) **EP 3 338 398 B1**
(45) Date of publication and mention of the grant of the patent: **08.07.2020**
(21) Application number: 15771584.8
(22) Date of filing: 29.09.2015
(51) Int. Cl.: H04L 9/08, H04L 9/32, H04L 29/06, H04W 4/02, H04W 12/04

(54) **SERVER AND METHOD FOR TRANSMITTING A GEO-ENCRYPTED MESSAGE**
SERVER UND VERFAHREN ZUR ÜBERTRAGUNG EINER GEOVERSCHLÜSSELTEN NACHRICHT
SERVEUR ET PROCÉDÉ DE TRANSMISSION D'UN MESSAGE GÉO-CHIFFRÉ

(43) Date of publication of application: 27.06.2018
(73) Proprietor: Huawei Technologies Co., Ltd., Longgang District Shenzhen, Guangdong 518129 (CN)
(72) Inventor: QUAGLIA, Elizabeth, 80992 Munich (DE); TOMASIN, Stefano, 80992 Munich (DE)
(74) Representative: Pfenning, Meinig & Partner mbB
(86) International application number: PCT/EP2015/072339
(87) International publication number: WO 2017/054843

(56) References cited:
- US-A1- 2009 316 900
- US-A1- 2010 195 829
- US-A1- 2014 179 341
- US-A1- 2014 213 294
- SANTI JARUSOMBAT ET AL: "Digital Signature on Mobile Devices based on Location", COMMUNICATIONS AND INFORMATION TECHNOLOGIES, 2006. ISCIT;06. INT ERNATIONAL SYMPOSIUM ON, IEEE, PI, 1 October 2006 (2006-10-01), pages 866-870, XP031068283, ISBN: 978-0-7803-9740-8
- AL-MUHTADI J ET AL: "Context and Location-Aware Encryption for Pervasive Computing Environments", PERVASIVE COMPUTING AND COMMUNICATIONS WORKSHOPS, 2006. PERCOM WORKSHO PS 2006. FOURTH ANNUAL IEEE INTERNATIONAL CONFERENCE ON PISA, ITALY 13-17 MARCH 2006, PISCATAWAY, NJ, USA,IEEE, 13 March 2006 (2006-03-13), pages 283-289, XP010910541, DOI: 10.1109/PERCOMW.2006.33 ISBN: 978-0-7695-2520-4

## Description

### TECHNICAL FIELD

The present invention relates to the field of geo-specific encryption. In particular, it relates to a server, a device and a system for transmitting an encrypted message. The present invention further relates to a device for receiving an encrypted message. The present invention also relates to a computer-readable storage medium storing program code, the program code comprising instructions for carrying out a method for transmitting an encrypted message.

The present invention also relates to a computer-readable storage medium storing program code, the program code comprising instructions for carrying out such a method.

### BACKGROUND

Message privacy is a fundamental aspect to secure communication. This is typically achieved by encryption, which allows a user to confidentially send a message to a receiver. With the appropriate key, the receiver is able to recover the message.

Geo-specific encryption broadly refers to schemes in which the position of the users is relevant to the encryption and decryption processes. This is extremely relevant in the secure delivery of location-based services, which can range from commercial (e.g. distribution of digital coupons only to be consumed at a specific store) to corporate (e.g. access to business emails only at specific offices). The market for such services is continuously growing and will probably expand even beyond what we can envisage at present.

Methods for geo-specific encryption have been suggested in the prior art. However, there is still a need for a more reliable geo-specific encryption. In particular, there is a need for providing a tamper-proof method for geo-specific encryption.

In *"*Digital Signature on Mobile Devices based on Location", COMMUNICATIONS AND INFORMATION TECHNOLOGIES, 2006. ISCIT;06. INT ERNATIONAL SYMPOSIUM ON, IEEE, PI, (20061001), ISBN 978-0-7803-9740-8, pages 866 - 870, XP031068283 [X], SANTI JARUSOMBAT ET AL describe that with rapid growing of wireless and mobile technologies, mobile devices are part and parcel of our lives. Nowadays GPS (Global Positioning Service) technology is combined with mobile devices. People use some Internet applications, e.g. mobile fund transfer, e-commerce, game online and theatre booking. These applications should support digital signature service for more security. Because mobile device is low-computation capability and limited battery life, it is not suitable to use digital signature protocols, which are based on asymmetric cryptographic algorithm, with mobile devices. And it does not use advantage of GPS technology. Instead it provides "location based digital signature on mobile devices" with geo-encryption to generate digital signature. This method reduces the burden on mobile devices, the computation time of the requester by almost 98%, compared with Abe-Fujisaki's RSA-based partially blind signature and decreases communication between sender and receiver.

In US 2014/213294 A1 methods, program products, and systems for reducing a location search space are described. A mobile device, when arriving at a venue, can determine a location of the mobile device using signals from one or more signal sources associated with the venue. The mobile device can use a coarse location estimator to estimate a coarse location of the mobile device at the venue. The mobile device can request, from a server, detailed location data associated with the coarse location. The detailed location data can include location fingerprint data associated with a portion of the venue that includes the coarse location. The mobile device can determine an estimated location that has finer granularity than the coarse location using the location fingerprint data.

US 2014/179341 A1 describes a technology related to low-power, accurate location estimation for mobile devices (such as a smartphone). More particularly, the disclosed technology facilitates estimation of a physical or "real world" location (e.g., geo-location) without relying on the conventional always-on and battery-draining approaches of Global Positioning Systems (GPSs) or some form of telemetry based upon multiple radio signals (e.g., cellular).

### SUMMARY OF THE INVENTION

According to the present application, the above objects are solved by the claimed matter according to the independent claims as well as their dependent claims. The objective of the present invention is to provide a system for transmitting an encrypted message and a geo-encryption method overcoming one or more of the problems of the prior art.

A first aspect of the invention includes a server for a communication system, comprising:
- a signature device configured to determine a measured location signature of a mobile device;
- a transmitter configured to transmit a decryption key that corresponds to the measured location signature;
- wherein the measured location signature comprises a result of a triangulation performed by one or more trusted base stations on one or more signals received from the mobile device (300, 706) or a measurement of one or more signals received from the mobile device (300, 706) by the one or more trusted base stations, wherein the one or more received signals comprise modifications of one or more signals transmitted from the mobile device (300, 706) as the one or more transmitted signals travel through a communication channel to the one or more trusted base stations;
the server (100, 702) further comprising:
- a receiver (110) configured to receive a location information from a sender de-vice, and
- a look-up unit (160) configured to determine one or more location signatures that correspond to the location information; and
- wherein the transmitter is configured to transmit the decryption key to the mobile device only if the look-up unit determines that the measured location signature of the mobile device corresponds to the location information.

The server of the first aspect determines a measured location signature, e.g. by measuring the location signature or by receiving a measurement from an external measurement device. Based on this measurement, the server can determine a decryption key that corresponds to the measured location signature, and transmit the decryption key. In particular, it can transmit the decryption key to the mobile device.
decrypted with any of the plurality of encryption keys. Thus, the mobile device can decrypt the encrypted message at any of the locations indicated in the location information.

The transmitter of the server can further be configured to transmit an encryption key corresponding to the decryption key. For example, the encryption key can be transmitted to a sender device, which is different from the mobile device.

Thus, if the mobile device has received an encrypted message that has been encrypted for a specified target location and correspondingly for a specified location signature, the mobile device will receive the corresponding decryption key only if it is located at the specified location. Otherwise, it will receive a decryption key for a different location, which it cannot use for decrypting the received message. Thus, the server of the first aspect can ensure that the mobile device can decrypt the encrypted message only when it is located at the specified target location.

For example, the target location can be specified by a sender device that sends the encrypted message to the mobile device and the decryption key to the server, together with an indication of the target location. Thus, the mobile device will receive the decryption key required for decrypting this encrypted message only when it is located at the target location indicated by the sender device.

The decryption key can be used by the mobile device to decrypt a message received from the sender device. However, in general, the decryption key may be necessary, but not sufficient for a decryption of the message. As will be outlined further below, additional information, e.g. another key that is not provided by the server, may be necessary in order to decrypt the message from the sender device.

The server of the first aspect can be a trusted server, i.e., it is assumed that it cannot be attacked by a malicious third party. For example, the trusted server could be protected against access from unauthorized third parties.

Preferably, the receiver is configured to receive the location information from a wireless sender device, e.g. a mobile phone. The location information could e.g. be real-world coordinates such as GPS coordinates.

It is understood that the transmitter is not necessarily configured to transmit the decryption key directly to the mobile device. For example, the server could be a node in a communication network, wherein the transmitter is configured to pass the decryption key to another node in the network, which will then forward the decryption key towards the mobile device.

The signature device of the server could comprise a set of antennae that receive signals from the mobile device. In this case, the location signature can be a set of received signals or a processing of them, wherein the received signals and/or the processing of them are preferably unique to a certain location, i.e. given a specific signature, there is only one location where this signature can be determined.

Preferably, the method of determining a location signature is chosen such that uniqueness of the location signatures is ensured. For example, if the received signals of base stations are not sufficient (e.g. because different base stations might receive similar or identical signals) the location signature could be obtained by combining one or more measured signals with a unique code of the base station.

In other embodiments of the invention, the server does not itself comprise equipment to measure the signature of the mobile device. Instead, the signature device can be configured to receive the signature from a separate measurement device external to the server. For example, the signature could be measured (and/or processed) at a base station which is configured to forward the measured signature to a server according to the first aspect.

The signature device can be a measurement device or can be connected to a measurement device. Herein, the measurement device can be specified for example as a triangulation device or a device that associates the signature to a geographical location. In the latter case the measurement device can be adequately trained to correctly provide this association.

A location signature can be configured to comprise the modifications of one or more signals transmitted by the mobile device as the signals travel through the communication channel to the server or to one or more base stations.

Optionally, the transmitter can be configured to transmit a decryption key to the mobile device only if the determined location signature corresponds to the received location information. To this end, the transmitter can comprise a controller or can be connected to an external controller, which ensures that the transmitter transmits the decryption key only if the determined location signature corresponds to the received location information.

The server can be configured such that it determines that the location information "corresponds" to the location signature only if the location information and the location signature refer to exactly the same location. In other embodiments of the invention, the location information would be considered to correspond to the location signature also if location information and location signature refer to locations that are at least within a certain maximum distance of each other.

The look-up unit can for example comprise a look-up table, which assigns one or more location signatures to a given location information. The look-up table can be filled e.g. during a training phase. In the training phase, a number of location signatures can be measured and recorded in order to define an area for which locations and areas (represented as collections of multiple locations) the proposed method works. The number of collected signatures to identify a location (with a given precision) or an area (intended as a collection of locations) should be accurately chosen in order to keep under control the event that a signature associated with a valid location is not in the look-up table.

The server of the first aspect has the advantage that it can be used in a system where the sender can indicate to the server at which location (as identified in the location information) a mobile device should be allowed to decrypt the message.

The server of the first aspect has the advantage that the decryption key is only transmitted to the mobile device if the mobile device is indeed at the target location specified by the sender device.

In a first possible implementation of the server according to the first aspect, the server comprises a key generator configured to generate the decryption key and a corresponding encryption key, wherein in particular the transmitter is configured to transmit the encryption key to the sender device.

The first implementation has the advantage that the key management is handled by the trusted server, which can be specifically protected against tampering by third parties.

In a second possible implementation of the server according to the first aspect as such or according to the any of the preceding implementation forms of the first aspect, the receiver is configured to receive the decryption key and/or a corresponding encryption key from the sender device.

This has the advantage that the sender device has control over the encryption process. For example, the user of the sender device can choose which encryption algorithm to use.

In a third possible implementation of the server according to the first aspect as such or according to the any of the preceding implementation forms of the first aspect, the server is further configured to transmit the decryption key to the mobile device only if a current time falls within one or more predetermined time intervals.

Thus, the server can ensure that the mobile device can decrypt the message only if the mobile device is at a certain location in space and time. For example, a sender of a message could wish that the user of the mobile device can decrypt the message only if he is at a certain location at the first day of the next week. Alternatively, the sender can identify one or more time intervals such that the user of the mobile device can only decrypt the message within one of the time intervals identified by the first user.

In a fourth possible implementation of the server according to the first aspect as such or according to the any of the preceding implementation forms of the first aspect, the location information comprises information about a region and/or a set of locations.

Thus, the location information identifies not only one location, but e.g. a larger region. For example, the location information could identify a street, a neighborhood or even an entire city. To this end, the location information could identify a set of locations which identify the outer corners of the target region.

If a location information corresponds to more than one location and thus also to more than one location signature, the encryption can be performed with a plurality of encryption keys (corresponding to the plurality of the location signatures) such that the encrypted message can be decrypted with any of the plurality of encryption keys. Thus, the mobile device can decrypt the encrypted message at any of the locations indicated in the location information.

The invention refers to a system for transmitting an encrypted message, comprising a server according to the first aspect as such or according to any of the implementation forms of the first aspect, a sender device for encrypting and transmitting a message, and a mobile device for receiving an encrypted message;
the sender device comprising:
- a receiver configured to receive a public key from a mobile device and to receive an encryption key from a server;
- an encryptor configured to encrypt a message using the public key and the encryption key, and
- a transmitter configured to transmit a location information to the server and the encrypted message to the mobile device; and
the mobile device comprising:
- a key generator configured to generate a public key and a private key;
- a transmitter configured to transmit the public key to the sender device;
- a receiver configured to receive an encrypted message from the sender device and a decryption key from the server;
- a decryptor configured to decrypt the encrypted message using the private key and the decryption key.

The sender device can be for example a mobile phone, comprising a receiver, an encryptor and a transmitter which are suitably configured. The configuration can be achieved e.g. via an application installed on the mobile phone. In other embodiments, the configuration is achieved in hardware.

In another example, the sender device of the second aspect is configured to transmit location information corresponding to its own location. The server can be configured to determine the corresponding location signature through the signal itself. This allows an "association on the fly" between the location information and the location signature.

In a first implementation of the sender device of the second aspect, the sender device further comprises a key generator configured to generate the decryption key and a corresponding encryption key and the transmitter is configured to transmit the decryption key to the server.

This has the advantage that the sender device of the second aspect has full control over the used decryption and encryption keys.

In an example embodiment, the key generator is a random number generator and the decryption key is a random number. The algebraic operation can be a binary addition. In this embodiment, the message m is added to the random number r, and the result m+r is encrypted with the public key of the mobile device and transmitted to the mobile device as an encrypted message. The mobile device can decrypt the message and retrieve m+r, however this is not sufficient for determining the original message m. To this end, the device of the second aspect can transmit the random number r to the server (e.g. in encrypted form) and the server can be configured to transmit the random number r to the mobile device only if it has determined that a location signature of the mobile device corresponds to a location information that can be specified e.g. by the sender device. Once the mobile device has received the random number, it can use it to retrieve the original message.

For example, if the message m and the random number r are in binary format, the mobile device can bit-wise add the received number r to m+r in order to retrieve the original message, because for binary numbers m+r+r=m.

Thus, only when the mobile device is at the location identified by the sender device, can the mobile device successfully retrieve the original message.

In particular, the mobile device of the second aspect can be configured to communicate with and receive a message from the sender device of the second aspect.

The invention further refers to a geo-encryption method, the method comprising:
- determining, by a server, a measured location signature of a mobile device;
- transmitting a decryption key that corresponds to the determined location signature.

In a first implementation of the third aspect of the geo-encryption method, the method further comprises initial steps of:
- determining a plurality of location signatures;
- determining a plurality of location information;
- storing a correspondence between the plurality of location signatures and the plurality of location information.

Since the location information can be a different kind of information compared to the location signatures, the server can comprise a technique to associate (e.g. by a lookup table) the location information to the location signature. For example, the location information could be physical "real-world" coordinates and the location signature could be triangulation information or signal measurements from a plurality of receive antennas or a processed version of them (e.g., an average, a correlation,...).

This association can be "learned" during a training phase. The training phase might involve that a probe is brought to different predefined locations, the signals emitted by the probe are measured at a measurement device, and the association between predefined locations and emitted signals (i.e., the location signature) are stored in a lookup table for later use.

A sixth aspect of the invention refers to a computer-readable storage medium storing program code, the program code comprising instructions for carrying out the method of the fifth aspect or one of the implementations of the fifth aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, but modifications on these embodiments are possible without departing from the scope of the present invention as defined in the claims.
- FIG. 1: is a block diagram illustrating a server in accordance with an embodiment of the present invention;
- FIG. 2: is a block diagram illustrating a device for transmitting an encrypted message in accordance with a further embodiment of the present invention;
- FIG. 3: is a block diagram illustrating a device for receiving an encrypted message in accordance with a further embodiment of the present invention;
- FIG. 4: is a block diagram illustrating a system for transmitting an encrypted message in accordance with a further embodiment of the present invention;
- FIG. 5: is a flow chart of a method for transmitting an encrypted message in accordance with a further embodiment of the present invention;
- FIG. 6: is a block diagram illustrating entities and interactions in a system in accordance with a further embodiment of the present invention;
- FIG. 7A: is a block diagram illustrating interactions between a first user and a server in accordance with a further embodiment of the present invention;
- FIG. 7B: is a block diagram illustrating interactions between a second user and a server in accordance with a further embodiment of the present invention, and
- FIG. 8: is a flow chart of steps of a method for transmitting an encrypted message in accordance with a further embodiment of the present invention.

### DETAILED DESCRIPTION OF THE EMBODIMENTS

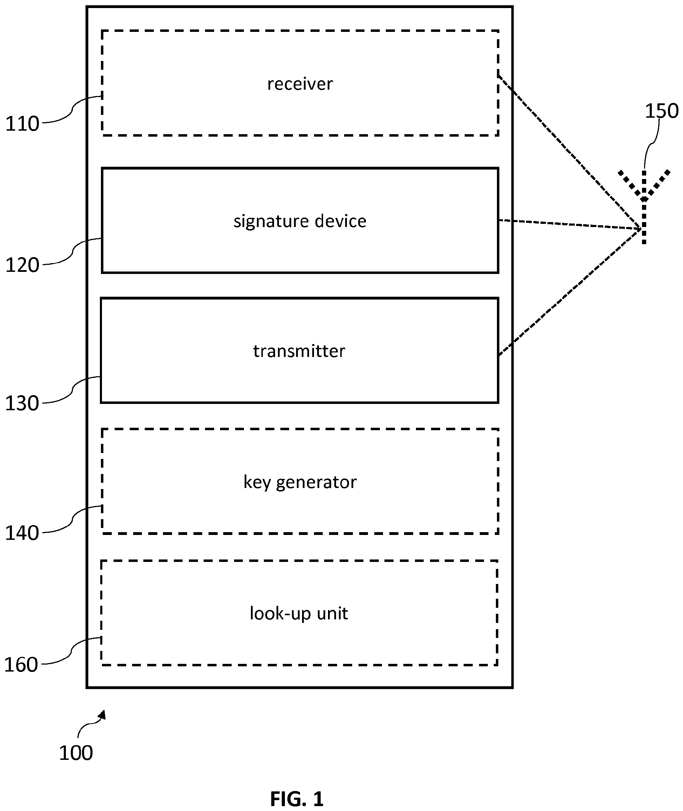

FIG. 1 illustrates a server 100 for a communication system. The server 100 comprises a signature device 120, and a transmitter 130. Optionally, as indicated with dashed lines in FIG. 1, the server 100 also comprises a receiver 110, a key generator 140 and a look-up unit 160. Further, the server 100 can optionally be connected to a common antenna 150, also indicated with dashed lines in FIG. 1, wherein the common antenna 150 is external to the server.

The receiver 110 is configured to receive a location information from a sender device. For example, the server 100 can be a base station of a wireless communication system, and the receiver 110 is the receive antenna of the base station with corresponding circuitry to receive a message from the sender device.

The signature device 120 can be a measurement device comprising set of antennas configured to receive signals from the mobile device. In a preferred embodiment, the signature device 120 comprises the receive antenna of the receiver 110, i.e., a same antenna is used to receive the location information from the sender device and to measure a location signature of the mobile device. This has the advantage that a smaller number of antennas are required at the server 100.

The transmitter 130 can comprise transmit antennas and controlling circuitry which is configured to determine a decryption key that corresponds to a measured location signature.

In a preferred embodiment, indicated with dashed lines in FIG. 1, the same common antenna 150 is used for receiving the location information from the sender device, measuring the location of the mobile device and transmitting the decryption key to the mobile device. This has the advantage that a smaller number of antennas are required compared to having several antennas for the different purposes. As indicated in FIG. 1, the common antenna 150 can be separate from the server 100, i.e. the server 100 comprises receiver 110, measurement device 120, and transmitter 130, which are configured to interact with the common antenna 150.

In a preferred embodiment, the server 100 is a trusted server 100 and is able to:
- establish a signature of a user by an independent method, e.g., by measuring a wireless propagation channel between server antennas and the user antennas, e.g. the antennas of a device of the user;
- associate to each measurement a unique position, e.g., each channel corresponds to a specific location and
- generate and safely store cryptographic keys, e.g., public key/secret key pairs for public-key encryption.

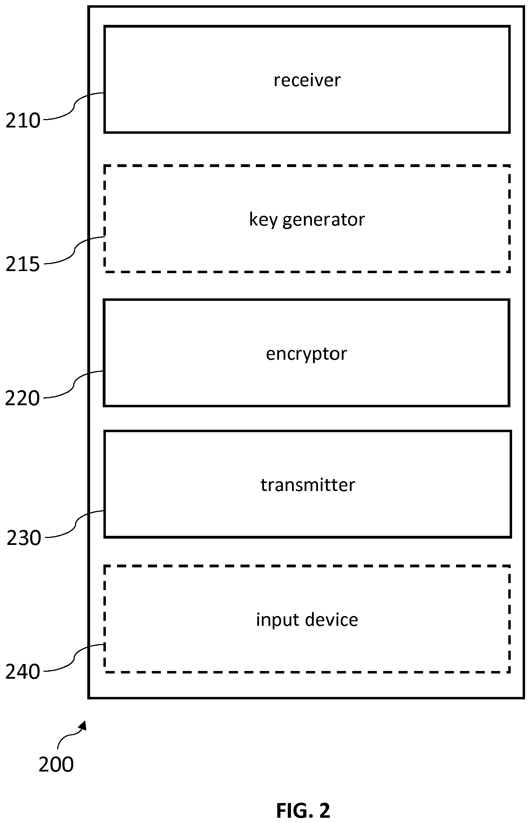

FIG. 2 illustrates a device 200 for transmitting an encrypted message in accordance with a further embodiment of the present invention. The device 200 comprises a receiver 210, an encryptor 220 and a transmitter 230. Optionally, it further comprises a key generator 215.

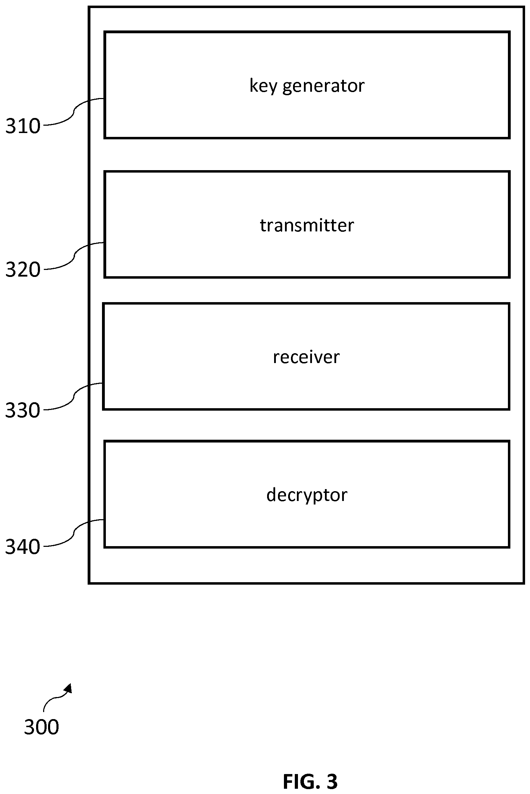

The receiver 210 is configured to receive a public key from a mobile device, e.g. the device shown in FIG. 3. The encryptor 220 is configured to encrypt a message with the public key that has been received from the mobile device. The transmitter 230 is configured to transmit the encrypted message.

Preferably, the device 200 further comprises an input device 240 (shown with dashed lines in FIG. 2), with which a user can enter a message in plain-text format. The plain-text message can then be encrypted by the encryptor 220. Preferably, input device is also configured to receive from a user an indication of a location. The device 200 can be configured to convert this indication of a location into a location information. For example, the user could enter the name of a street and a city, and the device 200 could convert these names into corresponding coordinates as location information. The transmitter 230 can further be configured to transmit the location information to a server, e.g. the server shown in FIG. 1.

Furthermore, the transmitter can be configured to transmit a key that has been generated by the key generator 215 to the server. In different embodiments this can be key that is necessary and/or sufficient for decrypting the message that the device of the second aspect has transmitted to the mobile device.

FIG. 3 illustrates a device 300 for receiving an encrypted message in accordance with a further embodiment of the present invention. The device 300 comprises a key generator 310, a transmitter 320, a receiver 330 and a decryptor 340.

The key generator 310 can be any key generator for generating encryption and/or decryption keys as known in the prior art, in particular a public / private key pair. For example, the key generator 310 can be configured to use random information for generating the key. This random information could be for example a current time and/or the strength of a received signal at a predefined frequency or frequency range. The transmitter 320 is configured to transmit a public key determined by the key generator 310 to the sender device.

The receiver 330 is configured to receive an encrypted message, e.g. from the sender device, and a decryption key, e.g. from a server. The decryptor 340 is configured to decrypt a received message using the private key and the decryption key.

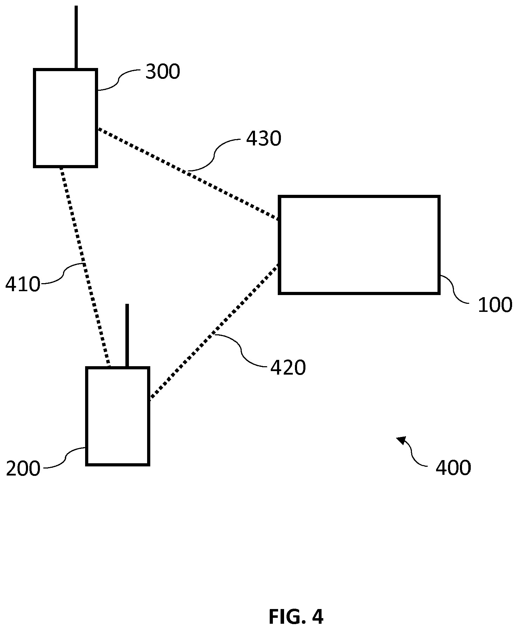

FIG. 4 illustrates a system 400 for transmitting an encrypted message in accordance with a further embodiment of the present invention. The system 400 comprises a server 100, e.g. the server of FIG. 1, a sender device 200, e.g. the device of FIG. 2, and a mobile device 300, e.g. the device of FIG. 3.

Server 100, sender device 200, and mobile device 300 can be nodes of a public wireless communication system. For example, the server 100 can be part of a base station, and the first and mobile devices 200, 300 can be mobile phones that are configured to interact with the base station.

In the system 400 of FIG. 4, the sender device 100 communicates directly with the mobile device 300, via a first communication link 410. This first communication link is indicated in FIG. 4 as a direct link between sender device 200 and mobile device 300. However, it is understood that in practice this could also be an indirect communication link, e.g. via further base stations of a wireless communication system.

A method for transmitting an encrypted message from the sender device 200 to the mobile device 300 such that the mobile device 300 can decrypt the encrypted message only at a location specified by a user of the sender device 200 can be carried out as follows:
The sender device 200 uses the first communication link 410 to transmit an encrypted message to the mobile device 300. The sender device 200 uses a second communication link 420, between the sender device 200 and the server 100, to send a decryption key to the server 100. Furthermore, the sender device sends a location information to the server 100. For example, the location information can first be determined on the sender device 200 based on a location indication (e.g. a street name) that the user has entered on an input device of the sender device 200.

The server 100 determines a location signature of the mobile device 300, e.g. based on a plurality of signals received from an external receive device, and, if the location signature corresponds to the location information that the server has received from the sender device 200, transmits the decryption key via a third communication link 430 to the mobile device 300. The mobile device 300 can then use the decryption key to decrypt the encrypted message.

The system can be configured such that the mobile device generates a public-key/secret-key pair on its own and, to encrypt a message m (for instance, a bit-string of length Iml) for position P to the mobile device, the sender device could pick a random bit-string r of the same length of m and encrypt r with the encryption key associated to P and r+m with the public key of the mobile device. In this way, the server cannot recover the message m (it can only recover r, which is random), while the mobile device needs both its secret key and the decryption key for P, which it receives from the server. The mobile device can then compute r+m+r = m, since r and m are bit-strings.

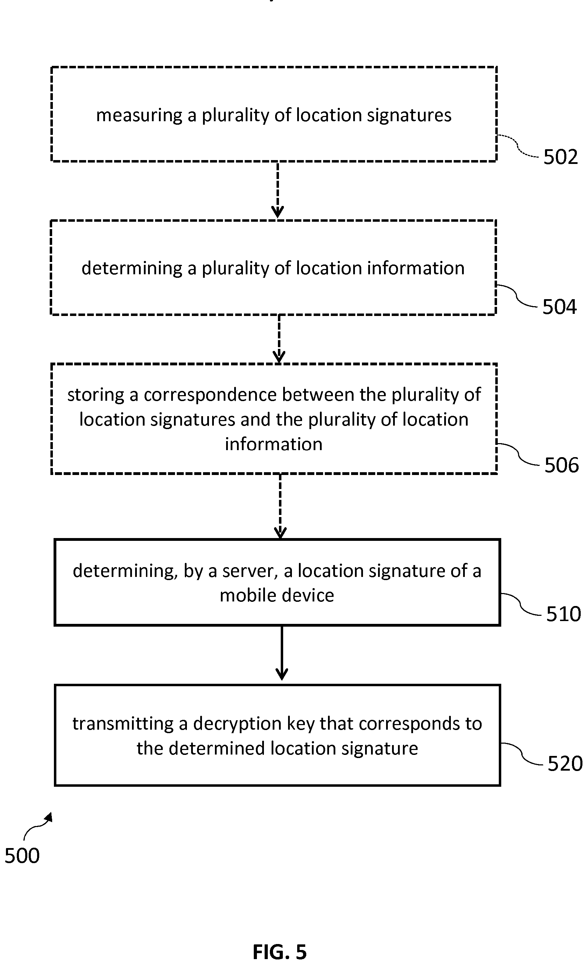

FIG. 5 illustrates a method 500 for transmitting an encrypted message in accordance with a further embodiment of the present invention.

The method 500 comprises a first step 510 of determining, by a server, a location signature of a mobile device. In a second step 520, a decryption key that corresponds to the received location signature is transmitted to the mobile device.

As illustrated with dashed lines in FIG. 5, the method optionally further comprises initial steps of determining a plurality of location signatures in a step 502 and determining a plurality of location information in a step 504. For example, a server can be configured to determine a location signature for a target device, and associate this with a reference location that is indicated by the target device. Subsequently, the server can, in a step 506, store a correspondence between the plurality of location signatures and the plurality of location information, wherein for example the location information are real-world coordinates. This represents a kind of "training phase", where the server learns which location signatures correspond to which location information. This makes it possible that later on the sender device can indicate a certain target coordinate, and the server knows from the training, which location signature corresponds to this target coordinate.

This training phase may be necessary in cases where it is not possible to derive location information directly from a measured location signature.

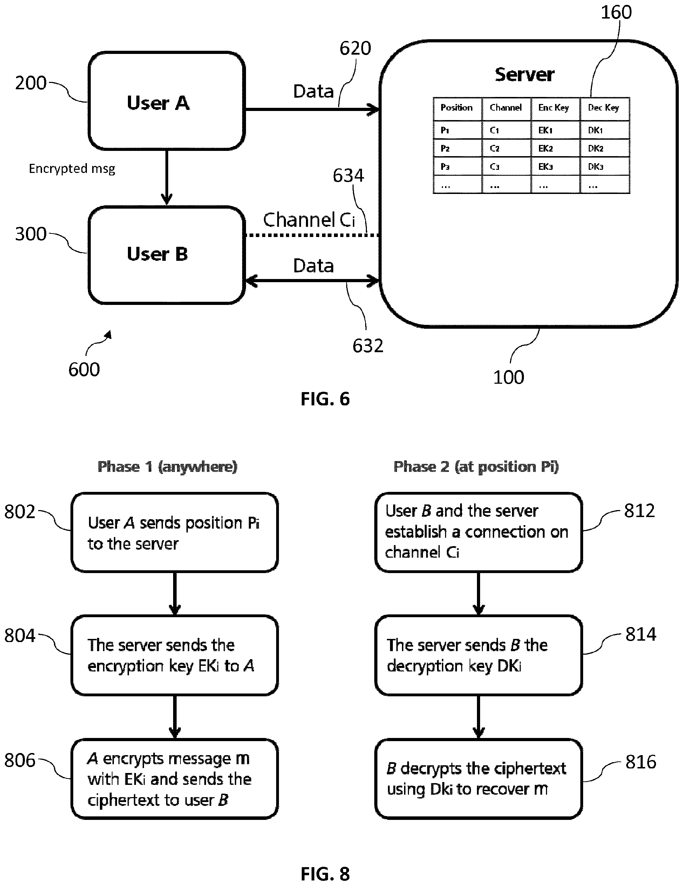

FIG. 6 is a block diagram illustrating entities and interactions in a system 600 in accordance with a further embodiment of the present invention. The system comprises a sender device, user A, indicated with reference number 200, and a mobile device, user B, indicated with reference number 300. User A sends an encrypted message to user B, and transmits data on a channel 620 to a server 100. The data comprises location information.

The server 100 comprises a look-up table 160 which stores an association between a position Pᵢ, a corresponding channel Cᵢ, and corresponding encryption keys EKᵢ and decryption keys DKᵢ. The channel Cᵢ is an example of a location signature.

In a further embodiment, user A and/or user B are able to:
- encrypt and decrypt messages with the appropriate keys;
- exchange encrypted messages with other users, and
- communicate with the server.

The system allows user A to encrypt a message and send it to a user B, such that it can only be decrypted once user B has reached a specific location Pi.

One trivial solution to this problem would be to ask user B his position and then when he declares that he is at a given position, provide him with the key to decrypt the message. However, this would allow user B to claim to be at location Pi even if this is not true, and decrypting the message nonetheless. In order to avoid this, system 600 can establish the position of user B by an independent method, thus preventing the second user from maliciously faking his location.

In a practical example, the location of user B can be independently established by triangulating a radio signal emitted by user B and received by a set of trusted base stations. In a further refinement, channel signatures (for example in terms of signal reflections of surrounding objects which determine a channel impulse response) can be used to determine the location: in this case no geometric triangulation is used, but an initial training phase can be carried out by the trusted base stations that associates the corresponding channel signatures to specific locations. The entity providing authentication of the location is a trusted server, which also manages the encryption and decryption keys used in the process.

In a preferred embodiment, the method can be carried out as follows:
1. user A sends the location Pᵢ to the server;
2. the server replies with the encryption key EKᵢ associated to location Pᵢ;
3. user A encrypts message m with EKᵢ and sends the encrypted message to user B;
4. user B goes to location Pᵢ;
5. the server measures the channel Cᵢ of user B and associates it to the location, which is established as Pᵢ;
6. the server sends user B the decryption key DKᵢ;
7. user B decrypts the message with DKᵢ.

Step 5 is dedicated to establishing the position of user B as discussed, e.g., by assessing the channel signature or by triangulation techniques.

Relevant features of this embodiment include:
- The message can be decrypted once user B has reached location Pᵢ;
- The location of user B is established by an independent method (e.g., wireless channel estimation);
- The channel signature Ci is never revealed to B, since only the decryption key is passed to the user (when in the correct location).

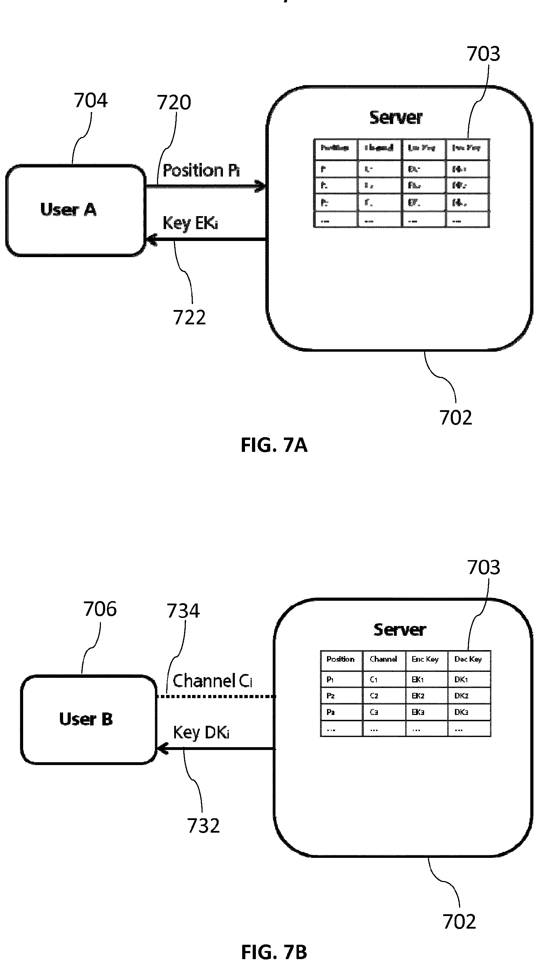

FIGs. 7A and 7B illustrate a further embodiment of the present invention. FIG. 7A is a block diagram illustrating interactions between a first user, user A, indicated with reference number 704, and a server 702 in accordance with a further embodiment of the present invention. User A sends a position Pᵢ to the server 702 in a position message 720. The server stores the position Pᵢ, together with a corresponding channel Cᵢ, in a look-up table 703, generates an encryption key and a decryption key and stores these in a dataset corresponding to the position Pᵢ. The encryption key is sent to user A in a key message 722.

FIG. 7B is a block diagram illustrating interactions between a second user, user B, indicated with reference number 706 and the server 702. The server 702 can be the server of FIG. 7A. User B communicates with the server 702 through a channel Cᵢ, indicated with reference number 734 in FIG. 7B. When the server 702 determines that user B is at the location Pᵢ that is stored in the look-up table 703, the server 702 sends a decryption message 732 to user B. The decryption message 732 comprises a decryption key DKᵢ, corresponding to location Pᵢ. Thus, user B can use the decryption key DKᵢ to decrypt the encrypted message it has previously received, e.g. from user A.

FIG. 8 is a flow chart of steps of a method for transmitting an encrypted message in accordance with a further embodiment of the present invention.

In a first phase, beginning with step 802, the user A sends a target position Pᵢ to the server. The target position Pᵢ is a location information. In a second step 804, the server sends an encryption key to user A. In a third step 806, user A uses the encryption key to encrypt a message m and send the encrypted message (ciphertext) to user B. The first phase can occur at any location of user A.

In a second phase, which starts with step 812 and which occurs at position Pᵢ, user B and the server establish a connection on channel Cᵢ. In step 814, the server sends user B the decryption key. For example, the server can determine the encryption key from an internal look-up table. In a last step 816 of the second phase, user B decrypts the ciphertext using the decryption key to recover the message m.

To summarize, there has been presented a mechanism for a user to encrypt and send a message over a wireless system, such that it can be decrypted once the receiver has reached a specific authenticated location. In preferred embodiments, the encryption can be performed by anyone, based only on the knowledge of the location where the message can be decrypted; and the receiver's position is established and implicitly authenticated by an independent system.

The presented approach to geo-specific encryption provides a higher level of security since a malicious user cannot fake its position in order to obtain the relevant decryption key.

Embodiments of the invention include:
1. A method that allows a user A to encrypt a message and send it to one or more destination users, such that it can only be decrypted once an independent server C establishes that the one or more destination users have reached a target location P, wherein the target location P can be indicated in a location information, which can be specified e.g. by user A.
2. The above method, where user A sends the location P to server C, which replies with the encryption key E, used by user A to encrypt the message.
3. One of the above methods, where the server establishes the position of destination users and sends to the destination users the decryption key D to decrypt the encrypted message.
4. One of the above methods, where server C establishes the position of destination users through triangulation of an electromagnetic signal generated by the destination users.
5. One of the above methods, where the position of destination users is established by their measure of the radio channel with respect to external radio emission sources, and where these measures or a processing of them are fed back to the server C.
6. One of the above methods, where user A encrypts also to a specific (set of) user(s) beyond to a specific location.
7. One of the above methods, where user A encrypt also to specific time intervals, so that destination users can decrypt only at a given time intervals.
8. One of the above methods, where location P is defined as a region or a set of distinct locations.
9. One of the above methods, where the encrypted message can go from user A to the destination users either directly or by multiple hops, possibly including the server in one hop.
10. One of the above methods, where user A and the server can coincide into a single entity.

The proposed methods overcome a limitation of the prior art by giving a trusted system (external and independent of the user) the burden of locating the user (e.g., by triangulation). This is advantageous in two respects: a) the location is established by a trusted party preventing the possibility of tampering with the device (since no specific device is used to obtain location by the receiver) and protecting against a malicious receiver and b) interaction between the trusted system and the receiver is needed at the time of decryption.

The foregoing descriptions are only implementation manners of the present invention, the protection of the scope of the present invention is not limited to this. Any variations or replacements can be easily made through person skilled in the art. Therefore, the protection scope of the present invention should be subject to the protection scope of the attached claims.

## Claims

1. A system (400) for transmitting an encrypted message, comprising a server (100, 702), a sender device (200, 704), and a mobile device (300, 706);
the server (100, 702) for the system (400), comprising:
- a signature device (120) configured to determine a measured location signature of the mobile device (300, 706);
- wherein the measured location signature comprises a result of a triangulation performed by one or more trusted base stations on one or more signals received from the mobile device (300, 706) or a measurement of one or more signals received from the mobile device (300, 706) by the one or more trusted base stations, wherein the one or more received signals comprise modifications of one or more signals transmitted from the mobile device (300, 706) as the one or more transmitted signals travel through a communication channel to the one or more trusted base stations;
the server (100, 702) further comprising:
- a receiver (110) configured to receive a location information from the sender device, and
- a look-up unit (160) configured to determine one or more location signatures that correspond to the location information; and
- a transmitter (130) is configured to transmit a decryption key to the mobile device only if the look-up unit determines that the measured location signature of the mobile device corresponds to the location information;
the sender device comprising:
- a receiver (210) configured to receive a public key from the mobile device (300, 706) and to receive an encryption key from the server;
- an encryptor (220) configured to encrypt a bit-wise sum of a message and a random string of a same length as the message using the public key to generate an encrypted message and to encrypt the random string using the encryption key to generate an encrypted random string, and
- a transmitter (230) configured to transmit the location information to the server and the encrypted message and the encrypted random string to the mobile device; and
the mobile device comprising:
- a key generator (310) configured to generate the public key and a private key corresponding to the public key;
- a transmitter (320) configured to transmit the public key to the sender device (200, 704);
- a receiver (330) configured to receive the encrypted message and the encrypted random string from the sender device and the decryption key from the server;
- a decryptor (340) configured to decrypt the encrypted random string using the decryption key, to decrypt the encrypted message using the private key and to recover the message by combining the decrypted random string and the decrypted bit-wise sum of the random string and the message.

2. The system of claim 1, wherein the server further comprises a key generator (140) configured to generate the decryption key and the encryption key, wherein in particular the transmitter (130) is configured to transmit the encryption key to the sender device (200, 704).

3. The system of one of the previous claims, wherein the receiver (110) is configured to receive the decryption key and/or a corresponding encryption key from the sender device (200, 704).

4. The system of one of the previous claims, wherein the server is further configured to transmit the decryption key to the mobile device (300, 706) only if a current time falls within one or more predetermined time intervals.

5. The system of one of the previous claims, wherein the location information comprises information about a region and/or a set of locations.

6. The system according to any of claims 1 to 5, wherein the sender device (200, 704) further comprising a key generator configured to generate the decryption key and a corresponding encryption key and wherein the transmitter is configured to transmit the decryption key to the server.

7. A geo-encryption method (500), the method comprising:
- determining (510), by a server, a measured location signature of a mobile device (300, 706);
- wherein the measured location signature comprises a result of a triangulation performed by one or more trusted base stations on one or more signals received from the mobile device (300, 706) or a measurement of one or more signals received from the mobile device (300, 706) by the one or more trusted base stations, wherein the one or more received signals comprise modifications of one or more signals transmitted from the mobile device as the signals travel through a communication channel to the one or more trusted base stations
- receiving, by the server, a location information from a sender device, and
- determining, by the server, one or more location signatures that correspond to the location information; wherein a transmitter of the server is configured to transmit a decryption key to the mobile device only if a look-up unit of the server determines that the measured location signature of the mobile device corresponds to the location information
- receiving, by the sender device, a public key from the mobile device (300, 706) and receiving, by the sender device, an encryption key from the server;
- encrypting, by the sender device, a bit-wise sum of message and a random string of a same length as the message using the public key to generate an encrypted message and to encrypt the random string using the encryption key to generate an encrypted random string, and
- transmitting, by the sender device, the encrypted message and the encrypted random string to the mobile device;
- generating, by the mobile device, a private key corresponding to the public key;
- receiving, by the mobile device, the encrypted message and the encrypted random string from the sender device
- decrypting, by the mobile device, the encrypted random string using the decryption key, decrypting the encrypted message using the private key and recovering the message by combining the decrypted random string and the decrypted bit-wise sum of the random string and the message.

8. The method (500) of claim 7, further comprising initial steps of:
- measuring (502) a plurality of location signatures;
- determining (504) a plurality of location information;
- storing (506) a correspondence between the plurality of location signatures and the plurality of location information.

## Patentansprüche

1. System (400) zum Übertragen einer verschlüsselten Nachricht, das einen Server (100, 702), eine Sendervorrichtung (200, 704) und eine Mobilvorrichtung (300, 706) umfasst;
wobei der Server (100, 702) für das System (400) Folgendes umfasst:
- eine Signaturvorrichtung (120), die dazu konfiguriert ist, eine gemessene Standortsignatur der Mobilvorrichtung (300, 706) zu bestimmen;
- wobei die gemessene Standortsignatur ein Resultat einer Triangulation, die von einer oder mehreren vertrauenswürdigen Basisstationen an einem oder mehreren von der Mobilvorrichtung (300, 706) empfangenen Signalen durchgeführt wird, oder eine Messung des einen oder der mehreren von der Mobilvorrichtung (300, 706) durch die eine oder die mehreren vertrauenswürdigen Basisstationen empfangenen Signale umfasst, wobei das eine oder die mehreren empfangenen Signale Modifikationen des einen oder der mehreren Signale umfassen, die von der Mobilvorrichtung (300, 706) übertragen werden, während das eine oder die mehreren übertragenen Signale durch einen Kommunikationskanal zu der einen oder den mehreren vertrauenswürdigen Basisstationen übergehen;
wobei der Server (100, 702) ferner Folgendes umfasst:
- einen Empfänger (110), der dazu konfiguriert ist, Standortinformationen von der Sendervorrichtung zu empfangen, und
- eine Verweiseinheit (160), die dazu konfiguriert ist, eine oder mehrere Standortsignaturen zu bestimmen, die den Standortinformationen entsprechen; und
- einen Überträger (130), der dazu konfiguriert ist, einen Entschlüsselungsschlüssel nur an die Mobilvorrichtung zu übertragen, wenn die Verweiseinheit bestimmt, dass die gemessene Standortsignatur der Mobilvorrichtung den Standortinformationen entspricht;
wobei die Sendervorrichtung Folgendes umfasst:
- einen Empfänger (210), der dazu konfiguriert ist, einen öffentlichen Schlüssel von der Mobilvorrichtung (300, 706) zu empfangen und einen Verschlüsselungsschlüssel von dem Server zu empfangen;
- eine Verschlüsselungseinrichtung (220), die dazu konfiguriert ist, bitweise eine Summe von Nachrichten und eine zufällige Folge der gleichen Länge wie die Nachricht mittels Verwenden des öffentlichen Schlüssels zu verschlüsseln, um eine verschlüsselte Nachricht zu generieren und um die zufällige Folge mittels Verwenden des Verschlüsselungsschlüssels zu verschlüsseln, um eine verschlüsselte zufällige Folge zu generieren, und
- einen Überträger (230), der dazu konfiguriert ist, die Standortinformationen an den Server und die verschlüsselte Nachricht und die verschlüsselte zufällige Folge an die Mobilvorrichtung zu übertragen; und
die Mobilvorrichtung dabei Folgendes umfasst:
- einen Schlüsselgenerator (310), der dazu konfiguriert ist, den öffentlichen Schlüssel und einen privaten Schlüssel zu generieren, der dem öffentlichen Schlüssel entspricht;
- einen Überträger (320), der dazu konfiguriert ist, den öffentlichen Schlüssel an die Sendervorrichtung (200, 704) zu übertragen;
- einen Empfänger (330), der dazu konfiguriert ist, die verschlüsselte Nachricht und die verschlüsselte zufällige Folge von der Sendervorrichtung und den Entschlüsselungsschlüssel von dem Server zu empfangen;
- eine Entschlüsselungsvorrichtung (340), die dazu konfiguriert ist, die verschlüsselte zufällige Folge mittels Verwenden des Entschlüsselungsschlüssels zu entschlüsseln, die verschlüsselte Nachricht mittels Verwenden des privaten Schlüssels zu entschlüsseln und die Nachricht durch Kombinieren der entschlüsselten zufälligen Folge und der entschlüsselten bitweisen Summe der zufälligen Folge und der Nachricht wiederherzustellen.

2. System nach Anspruch 1, wobei der Server ferner einen Schlüsselgenerator (140) umfasst, der dazu konfiguriert ist, den Entschlüsselungsschlüssel und den Verschlüsselungsschlüssel zu generieren, wobei insbesondere der Überträger (130) dazu konfiguriert ist, den Verschlüsselungsschlüssel an die Sendervorrichtung (200, 704) zu übertragen.

3. System nach einem der vorhergehenden Ansprüche, wobei der Empfänger (110) dazu konfiguriert ist, den Entschlüsselungsschlüssel und/oder einen entsprechenden Verschlüsselungsschlüssel von der Sendervorrichtung (200, 704) zu empfangen.

4. System nach einem der vorhergehenden Ansprüche, wobei der Server ferner dazu konfiguriert ist, den Entschlüsselungsschlüssel nur an die Mobilvorrichtung (300, 706) zu übertragen, wenn ein aktueller Zeitpunkt in ein oder mehrere vorbestimmte Zeitintervalle fällt.

5. System nach einem der vorhergehenden Ansprüche, wobei die Standortinformationen Informationen über ein Gebiet und/oder eine Reihe von Standorten umfassen.

6. System nach einem der Ansprüche 1 bis 5, wobei die Sendervorrichtung (200, 704) ferner einen Schlüsselgenerator umfasst, der dazu konfiguriert ist, den Entschlüsselungsschlüssel und einen entsprechenden Verschlüsselungsschlüssel zu generieren und wobei der Überträger dazu konfiguriert ist, den Entschlüsselungsschlüssel an den Server zu übertragen.

7. Geoverschlüsselungsverfahren (500), wobei das Verfahren Folgendes umfasst:
- Bestimmen (510) einer gemessenen Standortsignatur einer Mobilvorrichtung (300, 706) durch einen Server;
- wobei die gemessene Standortsignatur ein Resultat einer Triangulation, die von einer oder mehreren vertrauenswürdigen Basisstationen von einem oder mehreren von der Mobilvorrichtung (300, 706) empfangenen Signalen durchgeführt wird, oder eine Messung des einen oder der mehreren von dem Mobilgerät (300, 706) durch die eine oder die mehreren vertrauenswürdigen Basisstationen empfangenen Signale umfasst, wobei das eine oder die mehreren empfangenen Signale Modifikationen des einen oder der mehreren Signale umfassen, die von der Mobilvorrichtung übertragen werden, während die Signale durch einen Kommunikationskanal zu der einen oder den mehreren vertrauenswürdigen Basisstationen übergehen
- Empfangen von Standortinformationen von einer Sendervorrichtung durch den Server und
- Bestimmen von einer oder mehreren Standortsignaturen, die den Standortinformationen entsprechen, durch den Server; wobei ein Überträger des Servers dazu konfiguriert ist, einen Entschlüsselungsschlüssel nur an die Mobilvorrichtung zu übertragen, wenn die Verweiseinheit des Servers bestimmt, dass die gemessene Standortsignatur der Mobilvorrichtung den Standortinformationen entspricht
- Empfangen eines öffentlichen Schlüssels von der Mobilvorrichtung (300, 706) durch die Sendervorrichtung; und
Empfangen eines Verschlüsselungsschlüssels von dem Server durch die Sendervorrichtung;
- Verschlüsseln einer bitweisen Summe einer Nachricht und einer zufälligen Folge der gleichen Länge wie die Nachricht durch die Sendervorrichtung mittels Verwenden des öffentlichen Schlüssels, um eine verschlüsselte Nachricht zu generieren und um die zufällige Folge mittels Verwenden des Verschlüsselungsschlüssels zu verschlüsseln, um eine verschlüsselte zufällige Folge zu generieren, und
- Übertragen der verschlüsselten Nachricht und der verschlüsselten zufälligen Folge an die Mobilvorrichtung durch die Sendervorrichtung;
- Generieren eines privaten Schlüssels, der dem öffentlichen Schlüssel entspricht, durch die Mobilvorrichtung;
- Empfangen der verschlüsselten Nachricht und der verschlüsselten zufälligen Folge von der Sendervorrichtung durch die Mobilvorrichtung
- Entschlüsseln der verschlüsselten zufälligen Folge durch die Mobilvorrichtung mittels Verwenden des Entschlüsselungsschlüssels, Entschlüsseln der verschlüsselten Nachricht mittels Verwenden des privaten Schlüssels und Wiederherstellen der Nachricht durch Kombinieren der entschlüsselten zufälligen Folge und der entschlüsselten bitweisen Summe der zufälligen Folge und der Nachricht.

8. Verfahren (500) nach Anspruch 7, ferner die folgenden anfänglichen Schritte umfassend:
- Messen (502) einer Vielzahl von Standortsignaturen;
- Bestimmen (504) einer Vielzahl von Standortinformationen;
- Speichern (506) einer Entsprechung zwischen der Vielzahl von Standortsignaturen und der Vielzahl von Standortinformationen.

## Revendications

1. Système (400) de transmission d'un message chiffré, comprenant un serveur (100, 702), un dispositif expéditeur (200, 704), et un dispositif mobile (300, 706) ;
le serveur (100, 702) pour le système (400), comprenant :
- un dispositif de signature (120) configuré pour déterminer une signature d'emplacement mesurée du dispositif mobile (300, 706) ;
- dans lequel la signature d'emplacement mesurée comprend un résultat d'une triangulation réalisée par une ou plusieurs stations de base de confiance sur un ou plusieurs signaux reçus depuis le dispositif mobile (300, 706) ou une mesure d'un ou de plusieurs signaux reçus depuis le dispositif mobile (300, 706) par les une ou plusieurs stations de base de confiance, dans lequel les un ou plusieurs signaux reçus comprennent des modifications d'un ou de plusieurs signaux transmis depuis le dispositif mobile (300, 706) lorsque les un ou plusieurs signaux transmis se propagent à travers un canal de communication vers les une ou plusieurs stations de base de confiance ;
le serveur (100, 702) comprenant en outre :
- un récepteur (110) configuré pour recevoir des informations d'emplacement depuis le dispositif expéditeur, et
- une unité de recherche (160) configurée pour déterminer une ou plusieurs signatures d'emplacement qui correspondent aux informations d'emplacement ; et
- un émetteur (130) configuré pour transmettre une clé de déchiffrement au dispositif mobile uniquement si l'unité de recherche détermine que la signature d'emplacement mesurée du dispositif mobile correspond aux informations d'emplacement ;
le dispositif expéditeur comprenant :
- un récepteur (210) configuré pour recevoir une clé publique depuis le dispositif mobile (300, 706) et pour recevoir une clé de chiffrement depuis le serveur ;
- un chiffreur (220) configuré pour chiffrer une somme par bits d'un message et d'une chaîne aléatoire d'une même longueur que le message à l'aide de la clé publique pour générer un message chiffré et pour chiffrer la chaîne aléatoire à l'aide de la clé de chiffrement pour générer une chaîne aléatoire chiffrée, et
- un émetteur (230) configuré pour transmettre les informations d'emplacement au serveur et le message chiffré et la chaîne aléatoire chiffrée au dispositif mobile ; et
le dispositif mobile comprenant :
- un générateur de clés (310) configuré pour générer la clé publique et une clé privée correspondant à la clé publique ;
- un émetteur (320) configuré pour transmettre la clé publique au dispositif expéditeur (200, 704) ;
- un récepteur (330) configuré pour recevoir le message chiffré et la chaîne aléatoire chiffrée depuis le dispositif expéditeur et la clé de déchiffrement depuis le serveur ;
- un déchiffreur (340) configuré pour déchiffrer la chaîne aléatoire chiffrée à l'aide de la clé de déchiffrement, pour déchiffrer le message chiffré à l'aide de la clé privée et pour récupérer le message par combinaison de la chaîne aléatoire déchiffrée et de la somme par bits déchiffrée de la chaîne aléatoire et du message.

2. Système selon la revendication 1, dans lequel le serveur comprend en outre un générateur de clés (140) configuré pour générer la clé de déchiffrement et la clé de chiffrement, dans lequel, en particulier, l'émetteur (130) est configuré pour transmettre la clé de chiffrement au dispositif expéditeur (200, 704).

3. Système selon l'une quelconque des revendications précédentes, dans lequel le récepteur (110) est configuré pour recevoir la clé de déchiffrement et/ou une clé de chiffrement correspondante depuis le dispositif expéditeur (200, 704).

4. Système selon l'une quelconque des revendications précédentes, dans lequel le serveur est en outre configuré pour transmettre la clé de déchiffrement au dispositif mobile (300, 706) uniquement si un temps actuel tombe à l'intérieur d'un ou de plusieurs intervalles de temps prédéterminés.

5. Système selon l'une quelconque des revendications précédentes, dans lequel les informations d'emplacement comprennent des informations concernant une région et/ou un ensemble d'emplacements.

6. Système selon l'une quelconque des revendications 1 à 5, dans lequel le dispositif expéditeur (200, 704) comprenant en outre un générateur de clés configuré pour générer la clé de déchiffrement et une clé de chiffrement correspondante et dans lequel l'émetteur est configuré pour transmettre la clé de déchiffrement au serveur.

7. Procédé de géo-chiffrement (500), le procédé comprenant :
- la détermination (510), par un serveur, d'une signature d'emplacement mesurée d'un dispositif mobile (300, 706) ;
- dans lequel la signature d'emplacement mesurée comprend un résultat d'une triangulation réalisée par une ou plusieurs stations de base de confiance sur un ou plusieurs signaux reçus depuis le dispositif mobile (300, 706) ou une mesure des un ou plusieurs signaux reçus depuis le dispositif mobile (300, 706) par les une ou plusieurs stations de base de confiance, dans lequel les un ou plusieurs signaux reçus comprennent des modifications des un ou plusieurs signaux transmis depuis le dispositif mobile lorsque les signaux se propagent à travers un canal de communication vers les une ou plusieurs stations de base de confiance
- la réception, par le serveur, d'informations d'emplacement depuis un dispositif expéditeur, et
- la détermination, par le serveur, d'une ou de plusieurs signatures d'emplacement qui correspondent aux informations d'emplacement ; dans lequel un émetteur du serveur est configuré pour transmettre une clé de déchiffrement au dispositif mobile uniquement si une unité de recherche du serveur détermine que la signature d'emplacement mesurée du dispositif mobile correspond aux informations d'emplacement
- la réception, par le dispositif expéditeur, d'une clé publique depuis le dispositif mobile (300, 706) et la réception, par le dispositif expéditeur, d'une clé de chiffrement depuis le serveur ;
- le chiffrement, par le dispositif expéditeur, d'une somme par bits d'un message et d'une chaîne aléatoire d'une même longueur que le message à l'aide de la clé publique pour générer un message chiffré et pour chiffrer la chaîne aléatoire à l'aide de la clé de chiffrement pour générer une chaîne aléatoire chiffrée, et
- la transmission, par le dispositif expéditeur, du message chiffré et de la chaîne aléatoire chiffrée au dispositif mobile ;
- la génération, par le dispositif mobile, d'une clé privée correspondant à la clé publique ;
- la réception, par le dispositif mobile, du message chiffré et de la chaîne aléatoire chiffrée depuis le dispositif expéditeur
- le déchiffrement, par le dispositif mobile, de la chaîne aléatoire chiffrée à l'aide de la clé de déchiffrement, le déchiffrement du message chiffré à l'aide de la clé privée et la récupération du message par combinaison de la chaîne aléatoire déchiffrée et de la somme par bits déchiffrée de la chaîne aléatoire et du message.

8. Procédé (500) selon la revendication 7, comprenant en outre des étapes initiales consistant à :
- mesurer (502) une pluralité de signatures d'emplacement ;
- déterminer (504) une pluralité d'informations d'emplacement ;
- stocker (506) une correspondance entre la pluralité de signatures d'emplacement et la pluralité d'informations d'emplacement.
